# EUROPEAN PATENT APPLICATION

(11) **EP 4 703 262 A1**
(43) Date of publication of application: **04.03.2026**
(21) Application number: 24197217.3
(22) Date of filing: 29.08.2024
(51) Int. Cl.: B64C 3/50, B64C 9/02, B64C 9/24, B64C 9/34

(54) **WING FOR AN AIRCRAFT**

(71) Applicant: AIRBUS Operations GmbH, 21129 Hamburg (DE); Deutsches Zentrum für Luft- und Raumfahrt e.V., 53227 Bonn-Oberkassel (DE)
(72) Inventor: Schlipf, Bernhard, 21129 Hamburg (DE); Wild, Jochen, 38108 Braunschweig (DE)
(74) Representative: Bird & Bird LLP - Hamburg

(57) **Abstract**

Disclosed is a wing (5) for an aircraft (1), comprising a main wing (11), and a leading edge high lift assembly (13) comprising a high lift body (15), and a connection assembly (17) connecting the high lift body (15) to the main wing (11) in such a way that the high lift body (15) is movable relative to the main wing (11) between a stowed position and a deployed position. The connection assembly (17) comprises at least one linkage (19) mounted to the high lift body (15) and movably mounted to the main wing (11), so that the linkage (19) can be moved between a stowed state where the high lift body (15) is in the stowed position, and a deployed state where the high lift body (15) is in the deployed position, wherein the linkage (19) comprises a first link element (20), a second link element (21) and a third link element (22), wherein the first link element (20) is mounted to the main wing (11) in a manner rotatable about a first rotation axis (23), wherein the second link element (21) is mounted to the main wing (11) in a manner rotatable about a second rotation axis (24), wherein the third link element (22) is mounted to the first link element (20) in a manner rotatable about a third rotation axis (26) and is mounted to the second link element (21) in a manner rotatable about a fourth rotation axis (28), wherein the high lift body (15) is mounted to the third link element (22), wherein the main wing (11) comprises an upper skin panel (31) and a lower skin panel (33), wherein the upper skin panel (31) has a leading edge portion (35), wherein the high lift body (15) extends between a leading edge (41) and a trailing edge (43), wherein the trailing edge (43) of the high lift body (15) is configured to move along the leading edge portion (35) of the upper skin panel (31) of the main wing (11), when the high lift body (15) is moved between the stowed position and the deployed position. The object to provide a wing causing a smooth pressure profile along its upper skin panel, is achieved in that the leading edge portion (35) of the upper skin panel (31) is configured to be elastically deformed, when the high lift body (15) is moved from the stowed position to the deployed position.

## Description

The present invention relates to a wing for an aircraft. Further aspects of the invention relate to a leading edge high lift assembly for such a wing as well as a an aircraft comprising such a leading edge high lift assembly and/or such a wing.

The wing comprises a main wing and a leading edge high lift assembly movable relative to the main wing to increase lift of the wing. The leading edge high lift assembly comprises a high lift body and a connection assembly. The high lift body is preferably a droop high lift body referred to as droop nose, droop leading edge, droop flap or slat, in particular sealed slat. The connection assembly is configured for connecting the high lift body to the main wing, in particular to the leading edge of the main wing, in such a way that the high lift body is movable relative to the main wing between a stowed position and a deployed position. The stowed position relates to a position where the wing profile has a lower curvature and might also be referred to as straight position, normal position, cruise position or retracted position, while the deployed position relates to a position where the wing profile has a higher curvature and might also be referred to as drooped position, landing position or extended position.

The connection assembly comprises at least one linkage mounted to the high lift body and movably mounted to the main wing, so that the linkage can be moved between a stowed state where the high lift body is in the stowed position, and a deployed state where the high lift body is in the deployed position. The linkage is preferably formed as a four-bar-linkage and comprises a first link element, a second link element and a third link element. The first link element is mounted, preferably by its first end, to the main wing in a manner rotatable about a first rotation axis. The second link element is mounted, preferably by its first end, to the main wing in a manner rotatable about a second rotation axis spaced from the first rotation axis. The third link element is mounted to the first link element, preferably to a second end of the first link element, in a manner rotatable about a third rotation axis and is mounted to the second link element, preferably to a second end of the second link element, in a manner rotatable about a fourth rotation axis spaced from the third rotation axis. The high lift body is mounted to the third link element, preferably fixedly mounted to the third link element and/or directly mounted to the third link element but might also be indirectly mounted to the third link element.

The main wing comprises an upper skin panel for contact with an ambient flow on an upper side of the main wing, and a lower skin panel for contact with an ambient flow on a lower side of the main wing. The upper skin panel has a leading edge portion in the area of a leading edge of the main wing and facing the high lift body. The upper skin panel and the lower skin panel might be joined at the leading edge of the main wing or might have an open end at the leading edge of the main wing, where they might be connected or supported against each other via a front spar.

The high lift body extends between a leading edge and a trailing edge, the trailing edge preferably in parallel to the first and/or second rotation axis. The trailing edge of the high lift body is configured to move, preferably slide, along the outer surface of the leading edge portion of the upper skin panel of the main wing, preferably in contact with the outer surface of the leading edge portion of the upper skin panel, when the high lift body is moved between the stowed position and the deployed position. The contact might generally seal the high lift body to the upper skin panel for essential flow, but it might also be formed such that a leakage flow is permitted. It is also possible that the trailing edge of the high lift body moves along the outer surface of the leading edge portion of the upper skin panel of the main wing out of contact with the outer surface of the leading edge portion of the upper skin panel, when the high lift body is moved between the stowed position and the deployed position, so that a defined gap is formed between the trailing edge of the high lift body and the outer surface of the leading edge portion of the upper skin panel during movement of the high lift body, thereby allowing a defined leakage flow or even essential flow through the gap.

Similar wings are known in the art, e.g. from WO 2013/000577 A2. By increasing the curvature of the wing profile when the high lift body is moved to the deployed position, lift of the related aircraft can be increased, in particular to allow approach and landing with lower speed and on shorter runways. High lift assemblies with a drooping, downward rotating high lift body that is sealed to the leading edge portion of the upper skin panel, such as droop nose assemblies, related to simple and effective high lift devices. However, some known devices cause a pressure peak in the area of the transition between the trailing edge of the high lift body and the leading edge portion of the upper skin panel.

Therefore, the object of the present invention is to provide a wing causing a smooth pressure profile along its upper skin panel.

This object is achieved in that the leading edge portion of the upper skin panel is configured to be elastically deformed, in particular bent towards the lower skin panel, when the high lift body is moved from the stowed position to the deployed position. In such a way, a smooth transition from the trailing edge of the high lift body to the upper skin panel can be achieved avoiding small and discontinuous curvature radii. This results in a smooth pressure profile along the upper skin panel without undesired pressure peaks.

According to a preferred embodiment, the leading edge portion of the upper skin panel is configured to be elastically deformed, when the high lift body is moved from the stowed position to the deployed position, by at least one deformation link element that is rotatably mounted, preferably by its one end, to the linkage, preferably to the second link element, and that is rotatably mounted, preferably by its other end, to the leading edge portion of the upper skin panel. When the linkage moves to the deployed state to move the high lift body into the deployed position, the deformation link element mounted to the linkage pulls the leading edge portion of the upper skin panel downwards. When the linkage moves to the stowed state to move the high lift body back into the stowed position, the deformation link element pushes the leading edge portion of the upper skin panel back upwards into the undeformed state. By such a deformation link element the curvature of the leading edge portion of the upper skin panel can be precisely adapted to form the desired pressure profile.

Additionally or alternatively, it is preferred that the leading edge portion of the upper skin panel is configured to be elastically deformed, when the high lift body is moved from the stowed position to the deployed position, by at least one rocker assembly. The rocker assembly is preferably mounted to the linkage, preferably rotatably mounted to the linkage by its one end, and is preferably mounted to the leading edge portion of the upper skin panel, preferably rotatably mounted to the leading edge portion of the upper skin panel by its other end. When the linkage moves to the deployed state to move the high lift body into the deployed position, the rocker assembly mounted to the linkage pulls the leading edge portion of the upper skin panel downwards. When the linkage moves to the stowed state to move the high lift body back into the stowed position, the rocker assembly pushes the leading edge portion of the upper skin panel back upwards into the undeformed state. By such a deformation link element the curvature of the leading edge portion of the upper skin panel can be precisely adapted to form the desired pressure profile.

In particular, it is preferred that the rocker assembly comprises a first rocker arm, a second rocker arm, a first rocker link and a second rocker link. The first rocker arm and the second rocker arm are preferably mounted to the main wing rotatably about a common rocker axis in a torque-proof manner with respect to each other for common rotation about the rocker axis. The rocker axis preferably extends in the span direction. The first rocker link is rotatably mounted to the first rocker arm and is preferably rotatably mounted to the linkage, such as to the first link element. Alternatively, the first rocker link might also be coupled to the actuator. The second rocker link is rotatably mounted to the second rocker arm and is preferably rotatably mounted to the leading edge portion of the upper skin panel. In such a way, a very simple and efficient rocker assembly is provided.

Additionally or alternatively, it is preferred that the leading edge portion of the upper skin panel is configured to be elastically deformed, when the high lift body is moved from the stowed position to the deployed position, by at least one rope element that is attached, preferably by its one end, to the linkage, preferably to the second link element, and that is attached, preferably by its other end, to the leading edge portion of the upper skin panel. When the linkage moves to the deployed state to move the high lift body into the deployed position, the rope mounted to the linkage pulls the leading edge portion of the upper skin panel downwards. When the linkage moves to the stowed state to move the high lift body back into the stowed position, the tension of the rope is released and the elastic properties of the upper skin panel move the leading edge portion of the upper skin panel back upwards into the undeformed state. By such a rope element the curvature of the leading edge portion of the upper skin panel can be precisely adapted to form the desired pressure profile.

Additionally or alternatively, it is preferred that the leading edge portion of the upper skin panel is configured to be elastically deformed by the trailing edge of the high lift body moving along and contacting, preferably sliding over and continuously contacting, preferably pressing onto, an outer surface of the leading edge portion of the upper skin panel, when the high lift body is moved from the stowed position to the deployed position. When the linkage moves to the deployed state to move the high lift body into the deployed position, the trailing edge of the high lift body mounted in a fixed or defined position relative to the linkage pushes the leading edge portion of the upper skin panel downwards. When the linkage moves to the stowed state to move the high lift body back into the stowed position, the elastic properties of the upper skin panel move the leading edge portion of the upper skin panel back upwards into the undeformed state. The trailing edge of the high lift body preferably has a defined stiffness to achieve the desired deformation of the leading edge portion of the upper skin panel. By the trailing edge of the high lift body deforming the leading edge portion of the upper skin panel the curvature of the leading edge portion of the upper skin panel can be precisely adapted to form the desired pressure profile in a very simple manner.

According to a preferred embodiment, the wing comprises an actuator mounted to the main wing and coupled to the linkage for driving the linkage between the stowed state and the deployed state, or coupled to the high lift body for driving the high lift body between the stowed position and the deployed position. Such an arrangement of an actuator is a simple and effective way to drive the high lift body.

In particular, it is preferred that the actuator is formed as a rotating actuator having a rotating drive arm coupled to the linkage or to the high lift body by a drive link that is rotatably mounted to the drive arm and that is rotatably mounted to the linkage, preferably to the first link element or to the second link element, or to the high lift body. In such a way, a simple and efficient actuation concept is obtained.

Alternatively, it is preferred that the actuator is formed as a rotating actuator that is arranged coaxially with the first rotation axis to directly drive the first link element about the first rotation axis, or that is arranged coaxially with the second rotation axis to directly drive the second link element about the second rotation axis. In such a way, an alternative simple and efficient actuation concept is obtained.

Alternatively, it is preferred that the actuator is formed as a linear actuator rotatably mounted to the main wing and having a linearly moving drive strut that is rotatably mounted to the linkage, preferably to the first link element or to the second link element, or to the high lift body. In such a way, an alternative simple and efficient actuation concept is obtained.

According to a preferred embodiment, the first rotation axis is arranged above the second rotation axis with respect to a thickness direction of the wing and/or to a normal position of the aircraft on the ground. In such a way, a beneficial movement path of the high lift body is achieved. However, it might also be that the first rotation axis is arranged below the second rotation axis.

According to a preferred embodiment, in the stowed state, the first rotation axis is arranged above the third rotation axis and the second rotation axis is arranged below the fourth rotation axis with respect to a thickness direction of the wing and/or to a normal position of the aircraft on the ground. In such a way, a beneficial movement path of the high lift body is achieved. However, it might also be that the first rotation axis is arranged below the third rotation axis and the second rotation axis is arranged above the fourth rotation axis.

According to a preferred embodiment, at least one stiffener is provided at the leading edge portion of the upper skin panel. The stiffener extends in a span direction, preferably in parallel to the axis of rotation and/or in parallel to the trailing edge of the high lift body. By such a spanwise stiffener deflection of the leading edge portion of the upper skin panel in the span direction can be reduced, in particular between different linkages or different connection assemblies in the span direction, if present.

In particular, it is preferred that the stiffener is formed separately from the upper skin panel and is attached to an inner surface of the leading edge portion of the upper skin panel. Preferably, the stiffener has an angled profile including a flange element resting against the inner surface of the leading edge portion of the upper skin panel, and a web element extending angled to the flange element and away from the inner surface of the leading edge portion of the upper skin panel. Such an angled profile might be an L-, C-, T-, Z-, or I-profile. Such a stiffener is lightweight, simple to install, and provides an effective stiffening.

Alternatively, it is preferred that the stiffener is formed integral with the leading edge portion of the upper skin panel. For example, the stiffener might be formed by bending a part of the leading edge portion of the upper skin panel made of a metal material, or might be moulded as part of the leading edge portion of the upper skin panel made of a fiber reinforced plastic material. Such an integral stiffener provides a simple form and requires no extra parts.

It is also preferred that the deformation link element and/or the rope element is attached to the leading edge portion of the upper skin panel via the stiffener or in the area of the stiffener. By the attachment to the stiffener with a defined stiffness a defined contact or gap between the trailing edge of the high lift body and the outer surface of the leading edge portion of the upper skin panel can be precisely adjusted as desired. Alternatively, the leading edge portion of the upper skin panel might also be attached to the deformation link element and/or the rope element in a position spaced from the attachment or from the area of the stiffener.

It is further preferred that the extension of the stiffener normal to the leading edge portion of the upper skin panel varies in the span direction. In such a way, the stiffness of the stiffener can be adapted as required in the span direction.

In particular, it is preferred that the extension of the stiffener normal to the leading edge portion of the upper skin panel varies in the span direction in such a way that a maximum extension is in the area of the attachment of the deformation link element and/or the rope element, while the extension is decreasing, preferably linearly decreasing, in the span direction with increasing distance from the area of the attachment of the deformation link element and/or the rope element. Likewise, a minimum extension is located between, preferably centrally between, the deformation link elements or rope elements of each two spanwise neighboring connection assemblies or linkages. In such a way, the stiffness of the stiffeners is distributed in the span direction such that the highest stiffness is present in the attachment area of the deformation link element or rope element.

According to a further preferred embodiment, the leading edge portion of the upper skin panel has a thickness varying in a chord direction, to adapt the curvature of the leading edge portion of the upper skin panel when in the deformed state. In such a way, the thickness of the leading edge portion of the upper skin panel can be used to tailor the curvature of the upper skin panel in the deformed state, i.e. when the high lift body is in the deployed position. Preferably, the thickness of the leading edge portion of the upper skin panel varies analogue to the bending moment resulting from elastic deformation of the leading edge portion of the upper skin panel, preferably in such a way that the varying bending stiffness along the chord direction of the leading edge portion of the upper skin panel, resulting from the varying thickness, compensates the bending moment.

In particular, it is preferred that the thickness of the leading edge portion of the upper skin panel increases linearly or essentially linearly in the chord direction downstream, preferably from the leading edge downstream. In such a way, the bending stiffness of the leading edge portion of the upper skin panel in the chord direction can be adapted to compensate the bending moment resulting from elastic deformation of the leading edge portion of the upper skin panel.

Additionally or alternatively, it is preferred that the leading edge portion of the upper skin panel is made of a fiber reinforced plastic having a varying laminate lay-up in the chord direction, to adapt the curvature of the leading edge portion of the upper skin panel when in the deformed state. In such a way, the laminate lay-up of the leading edge portion of the upper skin panel can be used to tailor the curvature of the upper skin panel in the deformed state, i.e. when the high lift body is in the deployed position. Preferably, the laminate lay-up of the leading edge portion of the upper skin panel varies analogue to the bending moment resulting from elastic deformation of the leading edge portion of the upper skin panel, preferably in such a way that the varying bending stiffness along the chord direction of the leading edge portion of the upper skin panel, resulting from the varying laminate lay-up, compensates the bending moment. Preferably, the laminate lay-up of the leading edge portion of the upper skin panel increases linearly in the chord direction downstream, preferably from the leading edge downstream.

Additionally or alternatively, it is preferred that the leading edge portion of the upper skin panel is provided with at least one reinforcement element, preferably attached to the inner surface of the upper skin panel, extending in the chord direction to vary the bending stiffness of the leading edge portion of the upper skin panel along the chord direction, to adapt the curvature of the leading edge portion of the upper skin panel when in the deformed state. The reinforcement element might itself have a bending stiffness constant or varying in the chord direction. In such a way, the reinforcement element can be used to tailor the curvature of the upper skin panel in the deformed state, i.e. when the high lift body is in the deployed position. Preferably, the reinforcement element is configured such that the bending stiffness of the leading edge portion of the upper skin panel varies in the chord direction analogue to the bending moment resulting from elastic deformation of the leading edge portion of the upper skin panel, in order to compensate the bending moment. Preferably, the reinforcement element is configured such that the bending stiffness of the leading edge portion of the upper skin panel increases linearly in the chord direction downstream, preferably from the leading edge downstream.

According to a further preferred embodiment, the leading edge high lift assembly comprises a further connection assembly spaced from the connection assembly in the span direction and preferably formed as the connection assembly. Preferably at least two spaced connection assemblies are provided to carry each high lift body. Each connection assembly might also comprise more than one linkage. In such a way, a stable hold and movement of the high lift body is achieved.

A further aspect of the invention relates to a leading edge high lift assembly for the wing according to any of the afore-described embodiments. The leading edge high lift assembly comprises a high lift body and a connection assembly for connecting the high lift body to a main wing in such a way that the high lift body is movable relative to the main wing between a stowed position and a deployed position. The connection assembly comprises at least one linkage mounted to the high lift body and configured to be movably mounted to the main wing, so that the linkage can be moved between a stowed state where the high lift body is in the stowed position, and a deployed state where the high lift body is in the deployed position. The linkage comprises a first link element, a second link element and a third link element. The first link element is configured to be mounted to the main wing in a manner rotatable about a first rotation axis. The second link element is configured to be mounted to the main wing in a manner rotatable about a second rotation axis. The third link element is mounted to the first link element in a manner rotatable about a third rotation axis and is mounted to the second link element in a manner rotatable about a fourth rotation axis. The high lift body is mounted to the third link element. The high lift body extends between a leading edge and a trailing edge, wherein the trailing edge of the high lift body is configured to move, in an installed state, along the leading edge portion of an upper skin panel of the main wing, when the high lift body is moved between the stowed position and the deployed position. The leading edge high lift assembly is configured such that in an installed state the leading edge portion of the upper skin panel can be elastically deformed, when the high lift body is moved from the stowed position to the deployed position. Features and effects described above in connection with the wing apply vis-a-vis also to the leading edge high lift assembly.

A further aspect of the invention relates to an aircraft comprising the wing according to any of the afore-described embodiments and/or comprising the leading edge high lift assembly according to any of the afore described embodiments. Features and effects described above in connection with the wing and in connection with the leading edge high lift assembly apply vis-a-vis also to the aircraft.

Preferred embodiments of the present invention are explained hereinafter in more detail by means of a drawing. The drawing shows in
- Fig. 1: a perspective view of an aircraft according to the invention,
- Fig. 2: a schematic cross-sectional view across the span direction of a wing according to a first embodiment of the invention,
- Fig. 3: a schematic cross-sectional view across the span direction of a wing according to a second embodiment of the invention,
- Fig. 4: a schematic cross-sectional view across the span direction of a wing according to a third embodiment of the invention,
- Fig. 5: a schematic cross-sectional view of across the span direction a wing according to a fourth embodiment of the invention,
- Fig. 6: a schematic cross-sectional view across the span direction of a wing according to a fifth embodiment of the invention, and
- Fig. 7: a schematic cross-sectional view of across the span direction a wing according to a sixth embodiment of the invention.

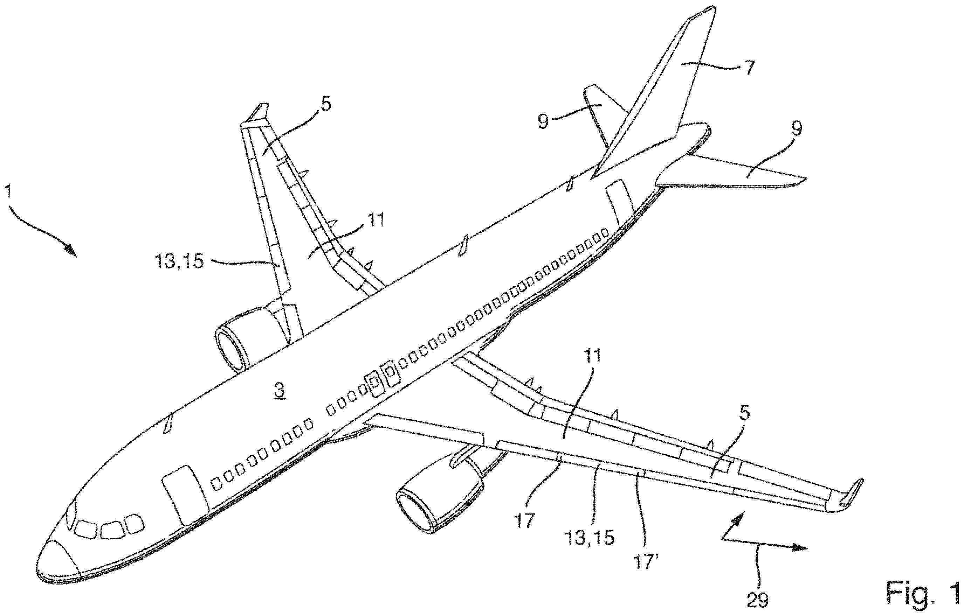

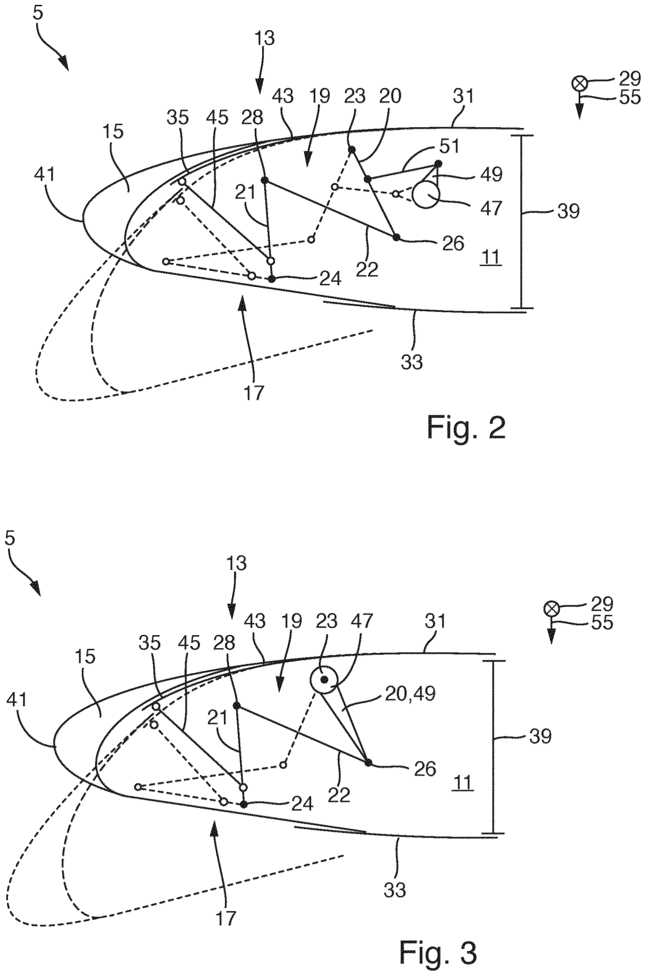

In Fig. 1 an embodiment of an aircraft 1 according to the present invention is illustrated. The aircraft 1 comprises a fuselage 3, wings 5, a vertical tail plane 7 and a horizontal tail plane 9. Figs. 2 to 7 show in more detail several embodiments of the wings 5.

Fig. 2 shows a first embodiment of the wing 5 according to the invention. The wing 5 comprises a main wing 11 and a leading edge high lift assembly 13 movable relative to the main wing 11 to increase lift of the wing 5. The leading edge high lift assembly 13 comprises a high lift body 15 and a connection assembly 17. The high lift body 15 is a droop high lift body also referred to as droop nose, droop leading edge, droop flap or slat, in particular sealed slat. The connection assembly 17 is configured for connecting the high lift body 15 to the leading edge of the main wing 11 in such a way that the high lift body 15 is movable relative to the main wing 11 between a stowed position and a deployed position. The stowed position relates to a position where the wing profile has a lower curvature, while the deployed position relates to a position where the wing profile has a higher curvature.

The connection assembly 17 comprises at least one linkage 19 that is mounted to the high lift body 15 and that is movably mounted to the main wing 11, so that the linkage 19 can be moved between a stowed state where the high lift body 15 is in the stowed position, and a deployed state where the high lift body 15 is in the deployed position. The linkage 19 comprises a first link element 20, a second link element 21 and a third link element 22. The first link element 20 is mounted to the main wing 11 in a manner rotatable about a first rotation axis 23. The second link element 21 is mounted to the main wing 11 in a manner rotatable about a second rotation axis 24 spaced from the first rotation axis 23. The third link element 22 is mounted to the first link element 20 in a manner rotatable about a third rotation axis 26 and is mounted to the second link element 21 in a manner rotatable about a fourth rotation axis 28 spaced from the third rotation axis 26. The high lift body 15 is fixedly mounted to the third link element 22.

The main wing 11 comprises an upper skin panel 31 for contact with an ambient flow on an upper side of the main wing 11, and a lower skin panel 33 for contact with an ambient flow on a lower side of the main wing 11. The upper skin panel 31 has a leading edge portion 35 in the area of a leading edge of the main wing 11 and facing the high lift body 15. The upper skin panel 31 and the lower skin panel 33 have an open end at the leading edge of the main wing 11, where they are connected or supported against each other via a front spar 39.

The high lift body 15 extends between a leading edge 41 and a trailing edge 43, the trailing edge 43 in parallel to the first rotation axis 23 and/or second rotation axis 24. The trailing edge 43 of the high lift body 15 moves in a sliding manner along the outer surface of the leading edge portion 35 of the upper skin panel 31 of the main wing 11 in contact with the outer surface of the leading edge portion 35 of the upper skin panel 31, when the high lift body 15 is moved between the stowed position and the deployed position. The contact generally seals the high lift body 15 to the upper skin panel 31 for essential flow, but a certain leakage flow might be permitted.

The leading edge portion 35 of the upper skin panel 31 is configured to be elastically deformed in such a way that it is bent towards the lower skin panel 33, when the high lift body 15 is moved from the stowed position to the deployed position. The elastic deformation can be done in different ways according to the invention, as described hereinafter.

In the embodiments shown in Figs. 2 to 7, the leading edge portion 35 of the upper skin panel 31 is configured to be elastically deformed, when the high lift body 15 is moved from the stowed position to the deployed position, by a deformation link element 45 that is rotatably mounted to the linkage 19, in particular to the second link element 21, and that is rotatably mounted to the leading edge portion 35 of the upper skin panel 31. When the linkage 19 moves to the deployed state to move the high lift body 15 into the deployed position, the deformation link element 45 mounted to the linkage 19 pulls the leading edge portion 35 of the upper skin panel 31 downwards. When the linkage 19 moves to the stowed state to move the high lift body 15 back into the stowed position, the deformation link element 45 pushes the leading edge portion of 35 the upper skin panel 31 back upwards into the undeformed state.

As an alternative to the deformation link element 45, a rope element (not shown) can be used to deform the leading edge portion 35 of the upper skin panel 31. Additional to the deformation caused by the deformation link element 45, in the embodiment of Figs. 2 to 7 the leading edge portion 35 of the upper skin panel 31 is configured to be elastically deformed by the trailing edge 43 of the high lift body 15 moving along in a sliding manner and continuously contacting and pressing onto an outer surface of the leading edge portion 35 of the upper skin panel 31, when the high lift body 15 is moved from the stowed position to the deployed position. When the linkage 19 moves to the deployed state to move the high lift body 15 into the deployed position, the trailing edge 43 of the high lift body 15 mounted in a fixed or defined position relative to the linkage 19 pushes the leading edge portion 35 of the upper skin panel 31 downwards. When the linkage 19 moves to the stowed state to move the high lift body 15 back into the stowed position, the elastic properties of the upper skin panel 31 move the leading edge portion 35 of the upper skin panel 31 back upwards into the undeformed state. The trailing edge 43 of the high lift body 15 has a defined stiffness to achieve the desired deformation of the leading edge portion 35 of the upper skin panel 31. In such a way, by the deformation link element 45 together with the trailing edge 43 of the high lift body 15 the curvature of the leading edge portion 35 of the upper skin panel 31 can be precisely adapted to form the desired pressure profile.

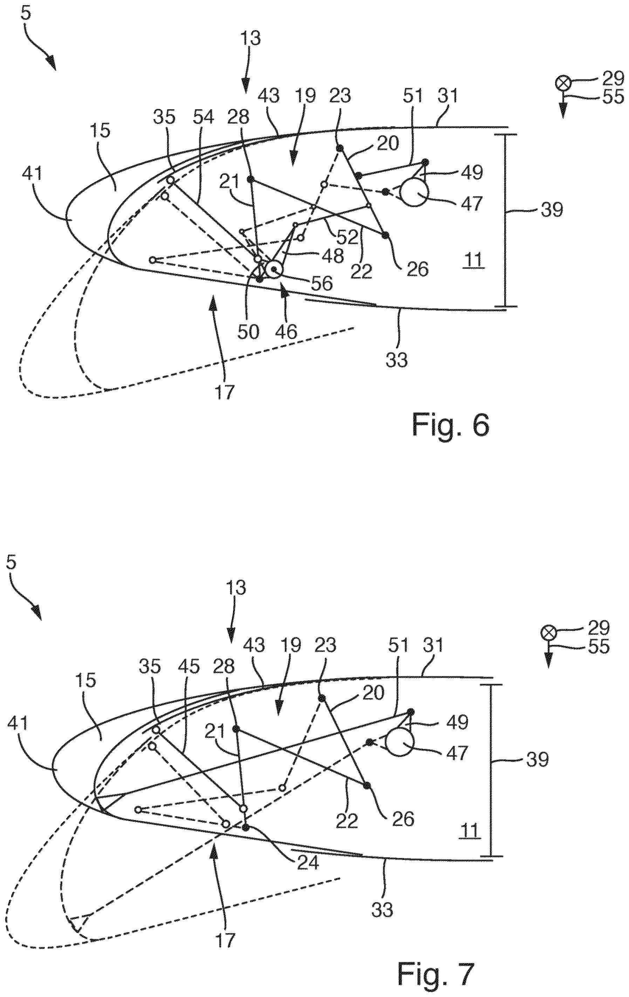

As a further alternative to the deformation link element 45, a rocker assembly 46 can be used to deform the leading edge portion 35 of the upper skin panel 31, as shown in Fig. 6. Specifically, in the embodiment shown in Fig. 6, the leading edge portion 35 of the upper skin panel 31 is configured to be elastically deformed, when the high lift body 15 is moved from the stowed position to the deployed position, by at least one rocker assembly 46. The rocker assembly 46 is mounted between the linkage 19 and the leading edge portion 35 of the upper skin panel 31. When the linkage 19 moves to the deployed state to move the high lift body 15 into the deployed position, the rocker assembly 46 mounted to the linkage 19 pulls the leading edge portion 35 of the upper skin panel 31 downwards. When the linkage 19 moves to the stowed state to move the high lift body 15 back into the stowed position, the rocker assembly 46 pushes the leading edge portion 35 of the upper skin panel 31 back upwards into the undeformed state. The rocker assembly 46 comprises a first rocker arm 48, a second rocker arm 50, a first rocker link 52 and a second rocker link 54. The first rocker arm 48 and the second rocker arm 50 are mounted to the main wing 11 rotatably about a common rocker axis 56 in a torque-proof manner with respect to each other for common rotation about the rocker axis 56. The first rocker link 52 is rotatably mounted to the first rocker arm 48 and is rotatably mounted to the linkage 19, in the present embodiment to the first link element 20. The second rocker link 54 is rotatably mounted to the second rocker arm 50 and is rotatably mounted to the leading edge portion 35 of the upper skin panel 31.

As shown in Figs. 2 to 7, the wing comprises an actuator 47 mounted to the main wing 11 and coupled to the linkage 19 for driving the linkage 19 between the stowed state and the deployed state (Figs. 2 to 6), or coupled to the high lift body 15 for driving the high lift body 15 between the stowed position and the deployed position (Fig. 7). The embodiments shown in Figs. 2 to 5 and 7 employ five different actuation concepts, as explained hereinafter.

In the embodiment shown in Fig. 2, the actuator 47 is formed as a rotating actuator having a rotating drive arm 49 coupled to the linkage 19 by a drive link 51 that is rotatably mounted to the drive arm 49 and that is rotatably mounted to the linkage 19, in the present embodiment to the first link element 20.

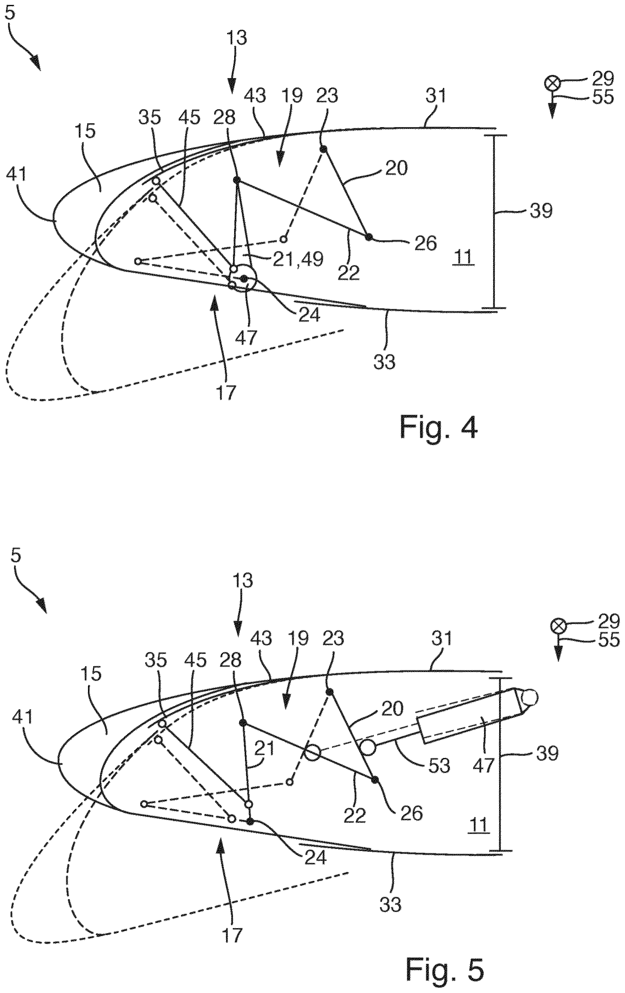

In the embodiment shown in Figs. 3 and 4, the actuator 47 is formed as a rotating actuator that is arranged coaxially with the first rotation axis 23 to directly drive the first link element 20 about the first rotation axis 23 (Fig. 3), or that is arranged coaxially with the second rotation axis 24 to directly drive the second link element 21 about the second rotation axis 24 (Fig. 4).

In the embodiment shown in Fig. 5, the actuator 47 is formed as a linear actuator rotatably mounted to the main wing 11 and having a linearly moving drive strut 53 that is rotatably mounted to the linkage 19, in the present embodiment to the first link element 20.

In the embodiment shown in Fig. 7, the actuator 47 is mounted to the main wing 11 and is coupled to the high lift body 15 for driving the high lift body 15 between the stowed position and the deployed position. In the present embodiment, the actuator 47 is formed as a rotating actuator having a rotating drive arm 49 coupled to the high lift body 15 by a drive link 51 that is rotatably mounted to the drive arm 49 and that is rotatably mounted to the high lift body 15.

As shown in Figs. 2 to 7, the first rotation axis 23 is arranged above the second rotation axis 24 with respect to a thickness direction 55 of the wing 11 and/or to a normal position of the aircraft 1 on the ground. Further, in the stowed state, the first rotation axis 23 is arranged above the third rotation axis 26 and the second rotation axis 24 is arranged below the fourth rotation axis 28 with respect to a thickness direction 55 of the wing 11 and/or to a normal position of the aircraft 1 on the ground.

As shown in Fig. 1, the leading edge high lift assembly 13 comprises a further connection assembly 17' spaced from the connection assembly 17 in the span direction 29 and preferably formed as the connection assembly 17. At least two spaced connection assemblies 17, 17' are provided to carry each high lift body 15. Each connection assembly 17, 17' might also comprise more than one linkage 19.

By the invention as described above, a smooth transition from the trailing edge 43 of the high lift body 15 to the upper skin panel 31 can be achieved avoiding small and discontinuous curvature radii. This results in a smooth pressure profile along the upper skin panel 31 without undesired pressure peaks.

## Claims

1. A wing (5) for an aircraft (1), comprising
a main wing (11), and
a leading edge high lift assembly (13) comprising
a high lift body (15), and
a connection assembly (17) connecting the high lift body (15) to the main wing (11) in such a way that the high lift body (15) is movable relative to the main wing (11) between a stowed position and a deployed position,
wherein the connection assembly (17) comprises at least one linkage (19) mounted to the high lift body (15) and movably mounted to the main wing (11), so that the linkage (19) can be moved between a stowed state where the high lift body (15) is in the stowed position, and a deployed state where the high lift body (15) is in the deployed position,
wherein the linkage (19) comprises a first link element (20), a second link element (21) and a third link element (22),
wherein the first link element (20) is mounted to the main wing (11) in a manner rotatable about a first rotation axis (23),
wherein the second link element (21) is mounted to the main wing (11) in a manner rotatable about a second rotation axis (24),
wherein the third link element (22) is mounted to the first link element (20) in a manner rotatable about a third rotation axis (26) and is mounted to the second link element (21) in a manner rotatable about a fourth rotation axis (28),
wherein the high lift body (15) is mounted to the third link element (22), wherein the main wing (11) comprises an upper skin panel (31) and a lower skin panel (33), wherein the upper skin panel (31) has a leading edge portion (35),
wherein the high lift body (15) extends between a leading edge (41) and a trailing edge (43), wherein the trailing edge (43) of the high lift body (15) is configured to move along the leading edge portion (35) of the upper skin panel (31) of the main wing (11), when the high lift body (15) is moved between the stowed position and the deployed position,
**characterized in that**
the leading edge portion (35) of the upper skin panel (31) is configured to be elastically deformed, when the high lift body (15) is moved from the stowed position to the deployed position.

2. The wing (5) according to claim 1, wherein the leading edge portion (35) of the upper skin panel (31) is configured to be elastically deformed, when the high lift body (15) is moved from the stowed position to the deployed position, by at least one deformation link element (45) rotatably mounted to the linkage (19) and rotatably mounted to the leading edge portion (35) of the upper skin panel (31).

3. The wing (5) according to claim 1 or 2, wherein the leading edge portion (35) of the upper skin panel (31) is configured to be elastically deformed, when the high lift body (15) is moved from the stowed position to the deployed position, by at least one rocker assembly (46) mounted to the linkage (19) and mounted to the leading edge portion (35) of the upper skin panel (31).

4. The wing (5) according to claim 3, wherein the rocker assembly (46) comprises a first rocker arm (48), a second rocker arm (50), a first rocker link (52) and a second rocker link (54),
wherein the first rocker arm (48) and the second rocker arm (50) are mounted to the main wing (11) rotatably about a common rocker axis (56) in a torque-proof manner with respect to each other for common rotation about the rocker axis (56),
wherein the first rocker link (52) is rotatably mounted to the first rocker arm (48) and is rotatably mounted to the linkage (19),
wherein the second rocker link (54) is rotatably mounted to the second rocker arm (50) and is rotatably mounted to the leading edge portion (35) of the upper skin panel (31).

5. The wing (5) according to any of claims 1 to 4, wherein the leading edge portion (35) of the upper skin panel (31) is configured to be elastically deformed, when the high lift body (15) is moved from the stowed position to the deployed position, by at least one rope element attached to the linkage (19) and attached to the leading edge portion (35) of the upper skin panel (31).

6. The wing (5) according to any of claims 1 to 5, wherein the leading edge portion (35) of the upper skin panel (31) is configured to be elastically deformed by the trailing edge (43) of the high lift body (15) moving along and contacting the leading edge portion (35) of the upper skin panel (31), when the high lift body (15) is moved from the stowed position to the deployed position.

7. The wing (5) according to any of claims 1 to 6, wherein the wing (5) comprises an actuator (47) mounted to the main wing (11) and coupled to the linkage (19) for driving the linkage (19) between the stowed state and the deployed state, or coupled to the high lift body (15) for driving the high lift body (15) between the stowed position and the deployed position.

8. The wing (5) according to claim 7, wherein the actuator (47) is formed as a rotating actuator having a rotating drive arm (49) coupled to the linkage (19) or to the high lift body (15) by a drive link (51) that is rotatably mounted to the drive arm (49) and that is rotatably mounted to the linkage (19) or to the high lift body (15).

9. The wing (5) according to claim 7, wherein the actuator (47) is formed as a rotating actuator that is arranged coaxially with the first rotation axis (23) to directly drive the first link element (20) about the first rotation axis (23), or that is arranged coaxially with the second rotation axis (24) to directly drive the second link element (21) about the second rotation axis (24).

10. The wing (5) according to claim 7, wherein the actuator (47) is formed as a linear actuator rotatably mounted to the main wing (11) and having a linearly moving drive strut (53) that is rotatably mounted to the linkage (19) or to the high lift body (15).

11. The wing (5) according to any of claims 1 to 10, wherein the first rotation axis (23) is arranged above the second rotation axis (24).

12. The wing (5) according to any of claims 1 to 11, wherein in the stowed state, the first rotation axis (23) is arranged above the third rotation axis (26) and the second rotation axis (24) is arranged below the fourth rotation axis.

13. The wing (5) according to any of claims 1 to 12, wherein the leading edge high lift assembly (13) comprises a further connection assembly (17') spaced from the connection assembly (17) in the span direction (29).

14. A leading edge high lift assembly (13) for the wing (5) according to any of claims 1 to 13, comprising
a high lift body (15), and
a connection assembly (17) for connecting the high lift body (15) to a main wing (11) in such a way that the high lift body (15) is movable relative to the main wing (11) between a stowed position and a deployed position,
wherein the connection assembly (17) comprises at least one linkage (19) mounted to the high lift body (15) and configured to be movably mounted to the main wing (11), so that the linkage (19) can be moved between a stowed state where the high lift body (15) is in the stowed position, and a deployed state where the high lift body (15) is in the deployed position,
wherein the linkage (19) comprises a first link element (20), a second link element (21) and a third link element (22),
wherein the first link element (20) is configured to be mounted to the main wing (11) in a manner rotatable about a first rotation axis (23),
wherein the second link element (21) is configured to be mounted to the main wing (11) in a manner rotatable about a second rotation axis (24),
wherein the third link element (22) is mounted to the first link element (20) in a manner rotatable about a third rotation axis (26) and is mounted to the second link element (21) in a manner rotatable about a fourth rotation axis (28),
wherein the high lift body (15) is mounted to the third link element (22), wherein the high lift body (15) extends between a leading edge (41) and a trailing edge (43), wherein the trailing edge (43) of the high lift body (15) is configured to move, in an installed state, along the leading edge portion (35) of an upper skin panel (31) of the main wing (11), when the high lift body (15) is moved between the stowed position and the deployed position,
**characterized in that**
the leading edge high lift assembly (13) is configured such that in an installed state the leading edge portion (35) of the upper skin panel (31) can be elastically deformed, when the high lift body (15) is moved from the stowed position to the deployed position.

15. An aircraft (1) comprising the wing (5) according to any of claims 1 to 13 and/or comprising the leading edge high lift assembly (13) according to claim 14.
